# EUROPEAN PATENT APPLICATION

(11) **EP 2 983 240 A1**
(43) Date of publication of application: **10.02.2016**
(21) Application number: 14778616.4
(22) Date of filing: 03.04.2014
(51) Int. Cl.: H01M 10/66, H01M 8/00, H01M 8/04, H01M 10/44, H01M 10/48, H01M 10/613, H01M 10/615, H01M 10/6568, H01M 8/12

(54) **POWER GENERATION SYSTEM, CONTROL METHOD FOR POWER GENERATION SYSTEM, AND FUEL CELL**

(30) Priority: 03.04.2013 JP 2013077345
(71) Applicant: Kyocera Corporation, Kyoto-shi, Kyoto 612-8501 (JP)
(72) Inventor: KUWABARA, Megumi, Kyoto-shi Kyoto 612-8501 (JP)
(74) Representative: Schwabe - Sandmair - Marx
(86) International application number: PCT/JP2014/001946
(87) International publication number: WO 2014/162746

(57) **Abstract**

Based on the temperature of medium (16) housed in a receptacle (14) and the temperature of a rechargeable battery (20), a power generation system (1) controls power generation by a fuel cell (12), subjects the medium (16) housed in the receptacle (14) to temperature control, and subjects the rechargeable battery (20) to temperature control via medium (16) supplied from a fuel cell power generator (10).

## Description

### CROSS-REFERENCE TO RELATED APPLICATION

This application claims priority to and the benefit of Japanese Patent Application No. 2013-077345 filed April 3, 2013, the entire contents of which are incorporated herein by reference.

### TECHNICAL FIELD

This disclosure relates to a power generation system, a method of controlling a power generation system, and a fuel cell. In greater detail, this disclosure relates to a power generation system including a rechargeable battery, a method of controlling this power generation system, and a fuel cell that can be used in such a power generation system.

### BACKGROUND

In recent years, systems that generate power with fuel cells such as Solid Oxide Fuel Cells (SOFC) have been installed in homes, and attempts are being made to generate power by using hydrogen gas as fuel and reacting the hydrogen gas with oxygen in the atmosphere. When surplus power is generated during power generation with such a power generation system, the surplus power can be stored by, for example, charging a rechargeable battery. On the other hand, when power exceeding the power generating capability of such a power generation system is necessary, the lack of necessary power can be compensated for by buying grid power.

Rechargeable batteries such as lithium-ion batteries have the advantage of a larger power capacity by mass than other rechargeable batteries such as lead batteries. If such a rechargeable battery is used together with the above-described fuel cell power generation system, then when the power generated by the power generation system is insufficient, the charged rechargeable battery can be used to compensate for the lack of power.

### CITATION LIST

### Patent Literature

PTL 1: JP 2006-278032 A

### SUMMARY

### (Technical Problem)

Rechargeable batteries such as lithium-ion batteries, however, have the characteristic that if the temperature of the battery is not managed appropriately, the performance of the battery, such as the capacity, rapidly degrades. For example, for many lithium-ion batteries, the temperature when charging and discharging is set to be from 0°C to 60°C. In particular, it is held that many lithium-ion batteries charge and discharge most efficiently at a temperature near 25°C. If the temperature of the rechargeable battery is not managed appropriately, the efficiency of charging and discharging reduces, and the life expectancy of the rechargeable battery is shortened. Therefore, rechargeable batteries are preferably kept at an appropriate temperature.

In order to address such conditions, one possibility is to install a new temperature control mechanism for controlling the temperature of a rechargeable battery (for example, see JP 2006-278032 A (PTL 1)). Newly installing such a temperature control mechanism, however, not only leads to the cost of investing in equipment but also the cost of energy for driving the mechanism. Overall, therefore, it is difficult to consider this an efficient way of generating power.

It would therefore be helpful to provide a power generation system that can control the rechargeable battery provided in a fuel cell power generation system to be an appropriate temperature, a method of controlling the power generation system, and such a fuel cell.

### (Solution to Problem)

In order to resolve the above problems, an exemplary power generation system includes:
a fuel cell power generator including a fuel cell and a receptacle housing a medium subjected to temperature control via power generation by the fuel cell;
a rechargeable battery capable of storing power generated by the fuel cell power generator; and
a controller that, based on a temperature of the medium housed in the receptacle and a temperature of the rechargeable battery, controls power generation by the fuel cell, subjects the medium housed in the receptacle to temperature control, and subjects the rechargeable battery to temperature control via medium supplied from the fuel cell power generator.

The controller may subject the rechargeable battery to temperature control by controlling a temperature of the medium supplied from the fuel cell power generator.

The controller may subject the rechargeable battery to temperature control by controlling an amount of the medium supplied from the fuel cell power generator.

The controller may control power generation by the fuel cell and subject the medium housed in the receptacle to temperature control so that at a set time, at least one of a temperature and an amount of the medium housed in the receptacle satisfies a set condition.

The controller may subject at least a portion of the medium to temperature control separately from the medium used for temperature control of the rechargeable battery.

The controller may control the rechargeable battery to be a set temperature at a set time.

Another exemplary power generation system includes:
a fuel cell power generator including a fuel cell and a receptacle housing a medium subjected to temperature control via power generation by the fuel cell;
a rechargeable battery capable of storing power generated by the fuel cell power generator;
a controller that, based on a temperature of the medium housed in the receptacle and a temperature of the rechargeable battery, controls power generation by the fuel cell, subjects the medium housed in the receptacle to temperature control, and subjects the rechargeable battery to temperature control via medium supplied from the fuel cell power generator; and
a meteorological information acquisition unit configured to acquire information on a meteorological element, such that
based on the information on a meteorological element acquired by the meteorological information acquisition unit, the temperature of the medium housed in the receptacle, and the temperature of the rechargeable battery, the controller controls power generation by the fuel cell, subjects the medium housed in the receptacle to temperature control, and subjects the rechargeable battery to temperature control via medium supplied from the fuel cell power generator.

In an exemplary method of controlling a power generation system, the power generation system includes:
a fuel cell power generator including a fuel cell and a receptacle housing a medium subjected to temperature control via power generation by the fuel cell; and
a rechargeable battery capable of storing power generated by the fuel cell power generator, and
the method includes:
   based on a temperature of the medium housed in the receptacle and a temperature of the rechargeable battery, controlling power generation by the fuel cell, subjecting the medium housed in the receptacle to temperature control, and subjecting the rechargeable battery to temperature control via medium supplied from the fuel cell power generator.

Furthermore, an exemplary fuel cell that subjects a medium to temperature control and is capable of supplying power to be stored in a rechargeable battery includes:
a controller that, based on a temperature of the medium and a temperature of the rechargeable battery, controls power generation by the fuel cell, subjects the medium to temperature control, and subjects the rechargeable battery to temperature control via the medium.

### (Advantageous Effect)

This disclosure for example provides a power generation system that controls a rechargeable battery provided in a fuel cell power generation system to be an appropriate temperature.

### BRIEF DESCRIPTION OF THE DRAWINGS

In the accompanying drawings:
FIG. 1 is a functional block diagram schematically illustrating the structure of a power generation system according to Embodiment 1;
FIG. 2 is a flowchart illustrating operations of the power generation system according to Embodiment 1;
FIG. 3 is a flowchart illustrating temperature control in the power generation system according to Embodiment 1;
FIG. 4 illustrates an example of temperature control in the power generation system according to Embodiment 1;
FIG. 5 illustrates an example of temperature control in the power generation system according to Embodiment 1;
FIG. 6 illustrates an example of temperature control in the power generation system according to Embodiment 1;
FIG. 7 illustrates an example of temperature control in the power generation system according to Embodiment 1;
FIG. 8 illustrates an example of temperature control in the power generation system according to Embodiment 1;
FIG. 9 illustrates an example of temperature control in the power generation system according to Embodiment 1; and
FIG. 10 is a functional block diagram schematically illustrating the structure of a power generation system according to Embodiment 2.

### DETAILED DESCRIPTION

With reference to the drawings, the following describes embodiments of a power generation system.

### (Embodiment 1)

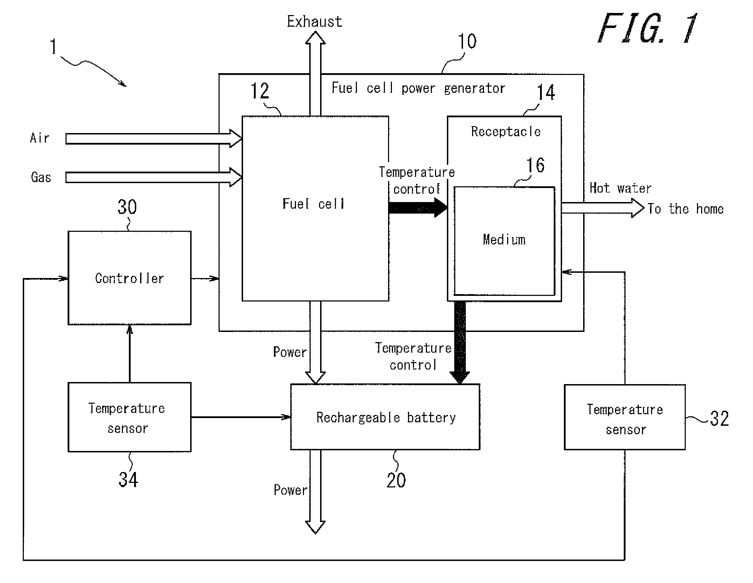

FIG. 1 is a functional block diagram schematically illustrating the structure of a power generation system according to Embodiment 1.

As illustrated in FIG. 1, the power generation system 1 according to this embodiment includes a fuel cell power generator 10, a rechargeable battery 20, and a controller 30. The fuel cell power generator 10 is assumed below to be a SOFC power generation system. The fuel cell power generator 10 is not, however, limited to a SOFC and may be another power generation system that generates heat along with power via power generation.

As illustrated in FIG. 1, the fuel cell power generator 10 includes a fuel cell 12 and a receptacle 14. The fuel cell 12 functions as a unit that generates power with a SOFC and generates power by taking in gas and air from outside of the fuel cell power generator 10. The fuel cell 12 can supply the power obtained in this way to the rechargeable battery 20. In FIG. 1, the power generated by the fuel cell power generator 10 is only illustrated as being provided to the rechargeable battery 20, yet another power supply line may be provided to allow for the power to be used in a home, without passing through the rechargeable battery 20. Exhaust resulting from power generation by the fuel cell 12 is ejected outside of the fuel cell power generator 10. In FIG. 1, to simplify the illustration, the fuel cell power generator 10 only includes the fuel cell 12 and the receptacle 14, yet an actual fuel cell power generator 10 includes a variety of functional units, such as the modifier provided in a SOFC power generation system.

The receptacle 14 houses a medium 16. In this embodiment, while the medium 16 is described as, for example, being water (liquid), any substance that can transfer heat (heat transfer medium) may be used. A unit that generates power with a SOFC, such as the fuel cell 12, emits hot water heated by the exhaust heat produced during power generation. Therefore, the fuel cell power generator 10 of this embodiment houses such hot water in the receptacle 14 as the medium 16. In other words, the fuel cell power generator 10 uses the heat generated as a result of power generation by the fuel cell 12 to control the temperature of the medium 16 housed in the receptacle 14. For example, by adjusting the power generated by the fuel cell 12, the fuel cell power generator 10 can control the heat that is generated, thus allowing for control of the temperature of the medium 16 housed in the receptacle 14.

A system that generates power with a SOFC, such as the fuel cell power generator 10, is normally provided with a mechanism such as a pump that takes in air necessary for power generation and a controller that controls this mechanism. Therefore, in the fuel cell power generator 10, it is also possible to cool the medium 16 housed in the receptacle 14 by additionally providing the fuel cell 12 with a device that has a function such as that of a radiator.

The medium 16 thus housed in the receptacle 14 can be ejected outside of the fuel cell power generator 10 and used as a household hot water supply. In this embodiment, the medium 16 housed in the receptacle 14 can also be used to control the temperature of the rechargeable battery 20. In order for the medium 16 to control the temperature of the rechargeable battery 20, for example a water cooling mechanism that circulates the medium 16 around the rechargeable battery 20 can be provided. Any other mechanism that heats or cools the rechargeable battery 20 by transferring heat of the medium 16 to the rechargeable battery 20 may also be used.

Within the receptacle 14, the medium 16 may be separated into multiple portions and housed. Separating and storing the medium 16 in this way makes it possible to control the medium 16 to be a plurality of different temperatures simultaneously. For example, by separating the medium 16 into two portions within the receptacle 14, one portion may be used as a household hot water supply, and the other portion may be used as a medium 16 at a different temperature for temperature control of the rechargeable battery 20. Hence, in this embodiment, the fuel cell power generator 10 can also control the medium 16 that is separated into a plurality of portions and housed in the receptacle 14 to be a plurality of different temperatures in accordance with use. In this case, the controller 30 preferably subjects at least a portion of the medium 16 to temperature control separately from the medium 16 that is used for temperature control of the rechargeable battery 20.

In FIG. 1, the control line for the fuel cell 12 to subject the medium 16 to temperature control and the control line for the medium 16 to subject the rechargeable battery 20 to temperature control, i.e. the route by which the medium 16 performs heat transfer, are illustrated in simplified form. These control lines may be structured in any way that allows for the respective temperature control.

The rechargeable battery 20 is configured with a battery that can charge and discharge power, such as a lithium-ion battery. As illustrated in FIG. 1, the rechargeable battery 20 can charge (store) the power generated by the fuel cell power generator 10. The power stored in the rechargeable battery 20 can, as necessary, be used in the home. In this way, even if power generation by the fuel cell power generator 10 does not provide the necessary power, the lack of power can be compensated for by discharging the power stored in the rechargeable battery 20. As described above, the rechargeable battery 20 undergoes temperature control (to be heated or cooled) by the medium 16 housed in the receptacle 14. When the necessary power cannot be supplied even by discharging the power stored in the rechargeable battery 20, the lack of power can be compensated for by buying grid power. When surplus power remains even after charging the rechargeable battery 20 with the power generated by the fuel cell power generator 10, a rechargeable battery other than the rechargeable battery 20 or the like may be charged.

The controller 30 subjects the medium 16 to temperature control via the fuel cell 12 in the fuel cell power generator 10 and subjects the rechargeable battery 20 to temperature control via the medium 16. Details on temperature control by the controller 30 are provided below. A temperature sensor 32 detects the temperature of the medium 16 housed in the receptacle 14 and notifies the controller 30 of the result of detection. In this embodiment, the temperature sensor 32 may for example be a water temperature sensor. A temperature sensor 34 detects the temperature of the rechargeable battery 20 and notifies the controller 30 of the result of detection. The temperature sensor 34 may be a sensor that can measure the temperature of the body of the rechargeable battery 20, or a plurality of sensors that can measure the environmental temperature may be provided. Any temperature sensors that are appropriate for detecting the respective temperatures may be used.

The fuel cell power generator 10 thus includes the fuel cell 12 and the receptacle 14 that houses the medium 16 subjected to temperature control via power generation by the fuel cell 12. The rechargeable battery 20 can store the power generated by the fuel cell power generator 10. The medium 16 housed in the receptacle 14 and the rechargeable battery 20 are subjected to temperature control by the controller 30.

Next, temperature control of the rechargeable battery 20 in the power generation system 1 of this embodiment is described.

In a fuel cell power generation system such as a SOFC, basically power is generated in conformity with the amount of hot water that is used. One of the reasons is that if the fuel cell system generated power in accordance with the amount of power used, unnecessary hot water would be generated, which would not conform to the philosophy of energy conservation. Therefore, as described above, when the power generated by the fuel cell system does not suffice for the power being used, an amount to cover the deficiency needs to be bought from the power grid. In this disclosure, by combining a fuel cell such as a SOFC and a rechargeable battery such as a lithium-ion battery and using power discharged by the rechargeable battery when power generation is insufficient, power need not be purchased from the power grid, making this approach extremely advantageous. Accordingly, in this disclosure, the medium 16 housed in the receptacle 14 via power generation by the fuel cell 12 is used for temperature control of the rechargeable battery 20.

When the rechargeable battery 20 is subjected to temperature control, in the case of heating the rechargeable battery 20, the medium 16 that is heated via heat generation by the fuel cell 12 may be used as is to heat the rechargeable battery 20. At present, however, fuel cell systems such as SOFC are not provided with a mechanism for cooling the generated hot water. Therefore, in this embodiment, in the case of cooling the rechargeable battery 20, the fuel cell 12 is additionally provided with a device that has a function such as that of a radiator, as described above.

In other words, in this embodiment, based on the temperature of the medium 16 housed in the receptacle 14 and the temperature of the rechargeable battery 20, the controller 30 controls power generation by the fuel cell 12 and also subjects the medium 16 stored in the receptacle 14 to temperature control. In this embodiment, based on the temperature of the medium 16 housed in the receptacle 14 and the temperature of the rechargeable battery 20, the controller 30 also causes the rechargeable battery 20 to undergo temperature control via the medium 16 supplied from the fuel cell power generator 10.

In order for the controller 30 to perform the above-described temperature control, relational expressions and the like necessary for a variety of calculations are required. For example, a relational expression representing the correlation between the temperature of the medium 16 and the combustion time of the fuel cell 12 and a relational expression or conversion table representing the correlation between the length of time required for temperature control of the rechargeable battery 20 and the medium 16 required for this temperature control are necessary. This variety of information (data) such as relational expressions required for temperature control may be stored in a storage such as a memory internal to the controller 30, or the controller 30 may retrieve this information from an external source.

Operations of the power generation system 1 according to this embodiment are now described in further detail.

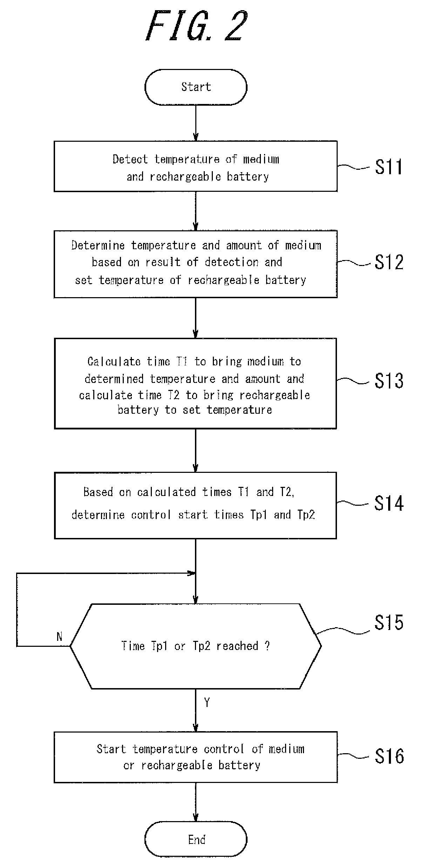

FIG. 2 is a flowchart illustrating operations by the power generation system 1. The operations illustrated in FIG. 2 begin when the temperature at which the rechargeable battery 20 is to be maintained (set temperature) and/or the necessary temperature and amount of the medium 16 (set temperature and set amount) are designated (input) by the user. These designations may be made in advance, and the operations in FIG. 2 may begin upon reaching the time at which the power generation system 1 is to begin operating.

Once the operations of the power generation system 1 according to this embodiment begin, the controller 30 performs control for the temperature sensor 32 to detect the temperature of the medium 16 housed in the receptacle 14 and control for the temperature sensor 34 to detect the temperature of the rechargeable battery 20 (step S11). Upon detecting the respective temperatures, the temperature sensor 32 and the temperature sensor 34 notify the controller 30 of the result of detection.

Once the temperature of the medium 16 and the rechargeable battery 20 is detected in step S11, then based on the result of detection and the set temperature of the rechargeable battery 20, the controller 30 determines the set temperature and set amount of the medium 16 that is to be prepared (step S12). In step S12, the controller 30 can also add in the temperature and amount of hot water designated before step S11. The controller 30 thus stores relational expressions, conversion tables, or the like necessary for determining the set temperature and set amount of medium 16 based on predetermined conditions.

Once the set temperature and set amount of the medium 16 are determined in step S12, the controller 30 calculates the length of time T1 (control time T1) necessary for bringing the medium 16 to the set temperature and set amount that were determined (step S13). In step S13, the controller 30 calculates the length of time T2 (control time T2) necessary for bringing the rechargeable battery 20 to the set temperature. The controller 30 thus also stores relational expressions, conversion tables, or the like necessary for calculating the control times T1 and T2 based on predetermined conditions.

Once the control time T1 is calculated in step S13, then based on the control time T1 of the medium 16, the controller 30 determines the time Tp1 at which to begin such control (control start time Tp1) (step S14). In step S14, based on the control time T2 of the rechargeable battery 20, the controller 30 also determines the time Tp2 at which to begin such control (control start time Tp2).

After step S14, if the control start time Tp1 has been reached (step S15), the controller 30 begins temperature control of the medium 16 (step S16). Also, after step S14, if the control start time Tp2 has been reached (step S15), the controller 30 begins temperature control of the rechargeable battery 20 (step S16).

In the operations illustrated in FIG. 2, the order of the temperature control of the medium 16 and the temperature control of the rechargeable battery 20 may also be designated. In other words, in accordance with user needs, the power generation system 1 may perform control either so that the rechargeable battery 20 preferentially reaches the set temperature or so that the medium 16 preferentially reaches the set temperature. For example, if the user has indicated that the rechargeable battery 20 should preferentially reach the set temperature, the controller 30 may begin with temperature control of the rechargeable battery 20 and then begin temperature control of the medium 16 once the rechargeable battery 20 reaches the set temperature. If the user has indicated that the medium 16 should preferentially reach the set temperature, the controller 30 may begin with temperature control of the medium 16 and then begin temperature control of the rechargeable battery 20 once the medium 16 reaches the set temperature. By thus prioritizing temperature control of either the medium 16 or the rechargeable battery 20, it can be expected that whichever of these has prioritized temperature control will reach the set temperature in a relatively short length of time.

Both the rechargeable battery 20 and the medium 16 may also be set to reach the set temperature at the same time. In this case, the controller 30 begins temperature control of each of these so that temperature control of each will finish simultaneously. Here, the controller 30 determines the control start times Tp1 and Tp2 so that the above-described control times T1 and T2 have matching end points.

As the above-described start time of temperature control, the controller 30 may perform control in accordance with a time set (input) by the user. Alternatively, based on a pattern learned from the user's usage history of the power generation system 1, the controller 30 may automatically set the start time. In the latter case, the controller 30 regularly records the time that the user sets for temperature control of the rechargeable battery 20 and the medium 16 and the set temperature at this time. Based on these recordings, the controller 30 can learn the usage pattern.

Next, the specific temperature control after the start of temperature control of the medium 16 or the rechargeable battery 20 in step S16 of FIG. 2 is described.

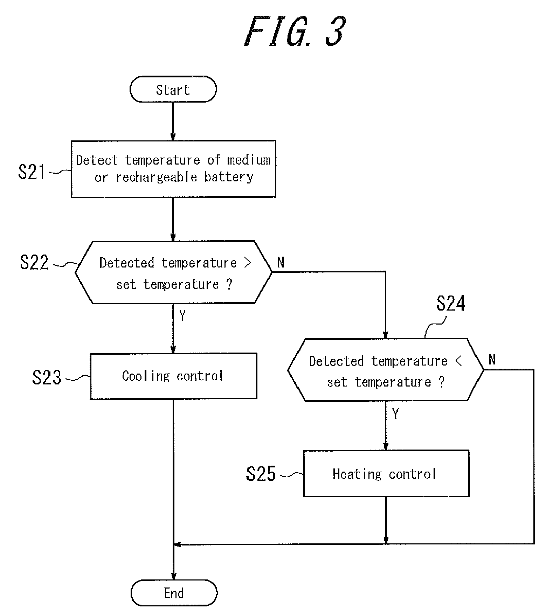

FIG. 3 is a flowchart illustrating temperature control by the power generation system 1. The basic concept of temperature control may be similar for both the medium 16 and the rechargeable battery 20. Accordingly, FIG. 3 collectively shows heat temperature control for the medium 16 and the rechargeable battery 20.

Once the temperature control of the medium 16 illustrated in FIG. 3 begins, the controller 30 detects the temperature of the medium 16 with the temperature sensor 32 (step S21). In step S22, when the temperature detected is higher than the set temperature of the medium 16, the controller 30 performs control to cool the medium 16 (step S23). The control to cool the medium 16 in step S23 cools the medium 16 housed in the receptacle 14 with a device such as a radiator that is added to the fuel cell 12, as described above.

Conversely, in step S24, when the temperature detected is lower than the set temperature of the medium 16, the controller 30 performs control to heat the medium 16 (step S25). The control to heat the medium 16 in step S25 heats the medium 16 housed in the receptacle 14 via power generation by the fuel cell 12, as described above.

Once the temperature control of the rechargeable battery 20 illustrated in FIG. 3 begins, the controller 30 detects the temperature of the rechargeable battery 20 with the temperature sensor 34 (step S21). In step S22, when the temperature detected is higher than the set temperature of the rechargeable battery 20, the controller 30 performs control to cool the rechargeable battery 20 (step S23). The control to cool the rechargeable battery 20 in step S23 cools the rechargeable battery 20 with the cooled medium 16, as described above.

Conversely, in step S24, when the temperature detected is lower than the set temperature of the rechargeable battery 20, the controller 30 performs control to heat the rechargeable battery 20 (step S25). The control to heat the rechargeable battery 20 in step S25 heats the rechargeable battery 20 with the heated medium 16, as described above.

In this way, in this embodiment, the controller 30 preferably controls the temperature and amount of the medium 16 supplied from the fuel cell power generator 10 so as to cause the rechargeable battery 20 to undergo temperature control.

Next, an example of operating the power generation system 1 based on the above-described temperature control is described in detail.

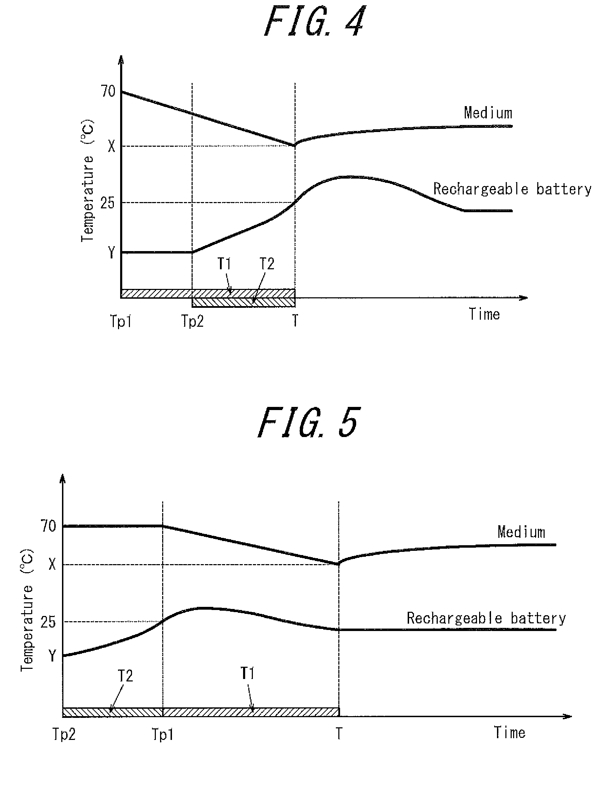

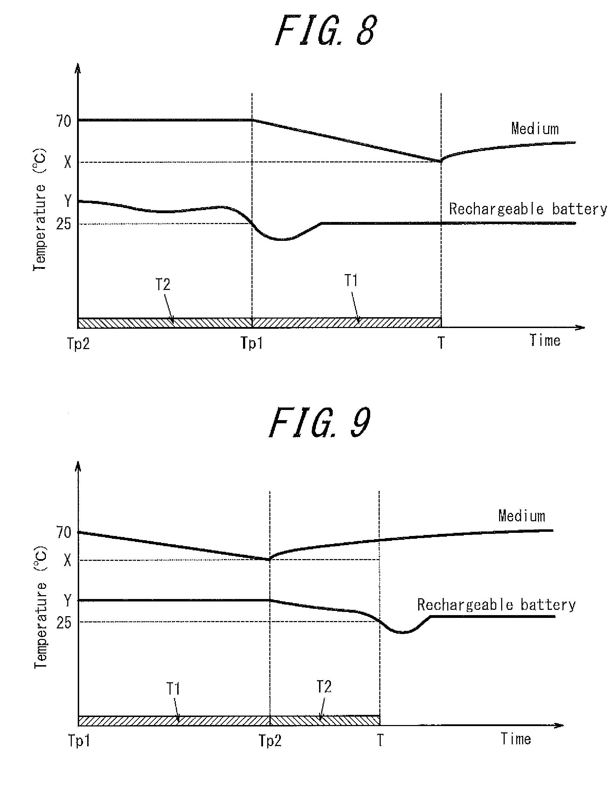

FIGS. 4 to 9 illustrate examples of temperature control in the power generation system 1 of Embodiment 1. These figures are graphs representing the change over time in the temperature of the medium 16 and the rechargeable battery 20 as a result of operation of the power generation system 1. In the graphs in FIGS. 4 to 9, the horizontal axis represents elapsed time, and the vertical axis represents temperature. The temperatures indicated in these figures may be treated as the temperature of the medium 16 detected by the temperature sensor 32 and the temperature of the rechargeable battery 20 detected by the temperature sensor 34.

FIGS. 4 to 9 illustrate the control time T1 of the medium 16 and the control time T2 of the rechargeable battery 20, along with the control start time Tp1 of the medium 16 and the control start time Tp2 of the rechargeable battery 20, which were explained with reference to FIG. 2. Furthermore, the time at which the temperature control of both the medium 16 and the rechargeable battery 20 finishes is indicated as T. In FIGS. 4 to 9, at the control start point, the temperature of the medium 16 is 70°C, the temperature of the rechargeable battery 20 is Y°C, the set temperature of the medium 16 is X°C, and the set temperature of the rechargeable battery 20 is 25°C.

FIG. 4 illustrates Example 1 of temperature control by the power generation system 1. FIG. 4 illustrates an example of the above-described case in which the user desires that both the rechargeable battery 20 and the medium 16 reach the set temperature at the same time T.

In the example illustrated in FIG. 4, the power generation system 1 performs control to cool the medium 16, which is at 70°C at the control start point, down to X°C and also performs control to heat the rechargeable battery 20, which is at Y°C degrees at the control start point, up to 25°C.

During this control, as described with reference to FIG. 2, in step S12 the controller 30 determines the set temperature and set amount of medium 16 in order to bring the temperature of the rechargeable battery 20 to 25°C. At this time, the temperature and amount of medium 16 (hot water) requested by the user for a purpose other than temperature control of the rechargeable battery 20 are also preferably taken into consideration. A variety of information, such as relational expressions or conversion tables for determining the set amount based on the set temperature of the medium 16, is assumed to be stored in the controller 30.

Next, in step S13, the controller 30 calculates the length of time necessary to reach the set temperature and set amount of the medium 16 and the length of time necessary to reach the set temperature of the rechargeable battery 20, i.e. the control time T1 and T2. A variety of information, such as relational expressions or conversion tables for calculating the control time T1 and T2, is also assumed to be stored in the controller 30.

As illustrated in FIG. 4, in order for both the rechargeable battery 20 and the medium 16 to reach the set temperature at the same time T, the control start time is determined so that for the longer of the control times T1 and T2, temperature control is complete at the time T. In other words, temperature control of the medium 16 begins at time Tp1, which precedes time T by the length of time T1, and temperature control of the rechargeable battery 20 begins at time Tp2, which precedes time T by the length of time T2.

As described in step S15 and step S16, once time Tp1 or Tp2 is reached, the power generation system 1 begins temperature adjustment of the medium 16 or the rechargeable battery 20. With this control, at time T, the rechargeable battery 20 is controlled to reach the set temperature, and the medium 16 is controlled to reach the set temperature and the set amount. In this embodiment, the controller 30 thus preferably performs control so that the rechargeable battery 20 reaches the set temperature at the set time. The controller 30 may control power generation by the fuel cell 12 and also subject the medium 16 housed in the receptacle 14 to temperature control so that at the set time, at least one of the temperature and the amount of the medium 16 housed in the receptacle 14 satisfies a set condition.

FIG. 5 illustrates Example 2 of temperature control by the power generation system 1. FIG. 5 illustrates an example of the above-described case in which temperature control of the rechargeable battery 20 is prioritized. In other words, FIG. 5 illustrates an example of the case in which the user desires that temperature control be performed for the medium 16 to reach the set temperature after the rechargeable battery 20 reaches the set temperature.

In the example illustrated in FIG. 5, temperature control of the medium 16 begins at time Tp1, which is the length of time T1 before time T, and temperature adjustment of the rechargeable battery 20 begins at time Tp2, which is the length of time T2 before time Tp1, so that all temperature adjustment finishes by time T.

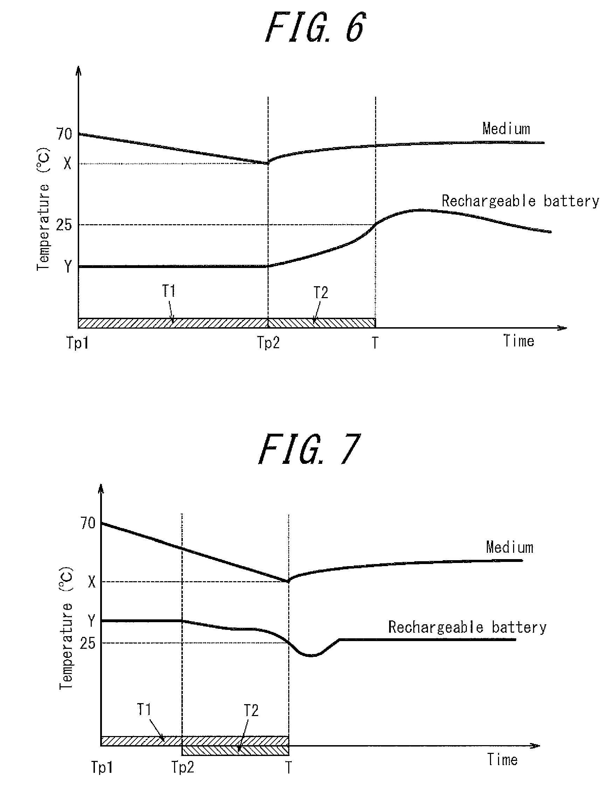

FIG. 6 illustrates Example 3 of temperature control by the power generation system 1. FIG. 6 illustrates an example of the opposite case from the example in FIG. 5, i.e. the case in which temperature control of the medium 16 is prioritized. In other words, FIG. 6 illustrates an example of the case in which the user desires that temperature control be performed for the rechargeable battery 20 to reach the set temperature after the medium 16 reaches the set temperature.

In the example illustrated in FIG. 6, temperature control of the rechargeable battery 20 begins at time Tp2, which is the length of time T2 before time T, and temperature adjustment of the medium 16 begins at time Tp1, which is the length of time T1 before time T, so that all temperature adjustment finishes by time T.

FIGS. 7 to 9 respectively illustrate Examples 4 to 6 of temperature control by the power generation system 1. FIGS. 7 to 9 are graphs illustrating examples corresponding to FIGS. 4 to 6. Whereas temperature control to heat the rechargeable battery 20 is performed in FIGS. 4 to 6, temperature control to cool the rechargeable battery 20 is performed in FIGS. 7 to 9. In FIGS. 7 to 9, the power generation system 1 performs control to cool the medium 16, which is at 70°C at the control start point, down to X°C and also performs control to cool the rechargeable battery 20, which is at Y°C degrees (a higher temperature than 25°C) at the control start point, down to 25°C.

### (Embodiment 2)

Next, Embodiment 2 of a power generation system is described.

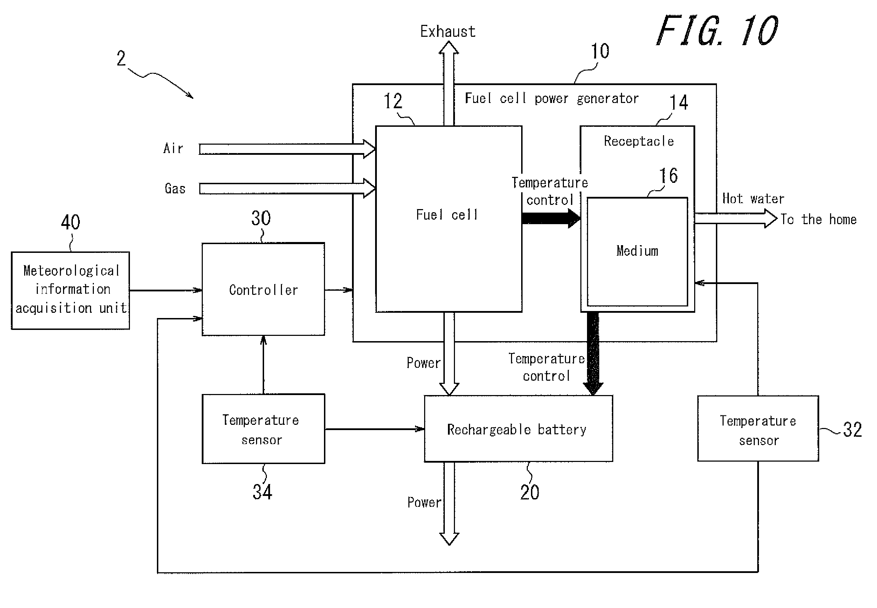

FIG. 10 is a functional block diagram schematically illustrating the structure of a power generation system according to Embodiment 2. As illustrated in FIG. 10, the power generation system 2 of Embodiment 2 has the structure of the power generation system in Embodiment 1, with the addition of a meteorological information acquisition unit 40. The structure of the power generation system 2 of Embodiment 2 other than the addition of the meteorological information acquisition unit 40 can be implemented with the same structure and control as those of the power generation system 1 of Embodiment 1. Accordingly, explanation that is similar to the power generation system 1 of Embodiment 1 is omitted.

The meteorological information acquisition unit 40 is configured to acquire information on meteorological elements for example from the Internet, television, radio, or the like. A variety of functional structures are envisioned, including a wired or wireless communication interface, a structure to connect to a server external to the power generation system 2, or the like. The meteorological information acquisition unit 40 notifies the controller 30 of the meteorological information thus acquired. Examples of the meteorological information acquired by the meteorological information acquisition unit 40 include information on meteorological elements such as weather, temperature, air pressure, and the like.

When temperature control is being performed, the fuel cell power generator 10 and the rechargeable battery 20 are of course affected by the surrounding environment. For example, if either or both of the fuel cell power generator 10 and the rechargeable battery 20 is installed outdoors in a cold region with a harsh natural environment, it is assumed that the effect of the surrounding environment may be significant depending on the weather. Accordingly, in such a case, if the meteorological information which is information on the surrounding natural environment can be acquired in advance, temperature control of the fuel cell power generator 10 and the rechargeable battery 20 can be performed after predicting subsequent changes in the natural environment.

In Embodiment 2, temperature control of the rechargeable battery 20 and the medium 16 is performed based as well on the meteorological information acquired by the meteorological information acquisition unit 40. Specifically, before the operation in step S12 of FIG. 2 is performed, the meteorological information acquisition unit 40 acquires the above-described meteorological information, and when performing the operation in step S12, the set temperature and set amount of the medium 16 are determined by also taking the meteorological information into consideration. Other operations may be performed similarly to Embodiment 1 as described with reference to FIG. 2.

In greater detail, when it is predicted by acquiring the meteorological information that the subsequent temperature will rise, then for example in the control illustrated in FIG. 3, the controller 30 negatively adjusts the temperature control of either or both of the rechargeable battery 20 and the medium 16. Conversely, when it is predicted by acquiring the meteorological information that the subsequent temperature will fall, then for example in the control illustrated in FIG. 3, the controller 30 positively adjusts the temperature control of either or both of the rechargeable battery 20 and the medium 16. A variety of information, such as relational expressions or conversion tables for determining the amount of adjustment during these negative and positive adjustments, may be stored in the controller 30. Alternatively, the controller 30 may acquire such information from an external source or acquire such information together with the meteorological information from the meteorological information acquisition unit 40.

In this embodiment, after adding in the acquired meteorological information, at least one of the set temperature and set amount of the medium 16 expected to be required for subsequent temperature control of the rechargeable battery 20 may be predicted, and the corresponding control start times may be determined based on the prediction. For example, when using the rechargeable battery 20 for peak shaving during the day, at which time the amount of power consumed increases, the necessary temperature of the medium 16 can be predicted to some degree from meteorological conditions. By acquiring information on the time at which peak shaving is implemented, the necessary amount of medium 16 can also be predicted to some degree. Determining the control start time of the medium 16 by acquiring such pieces of information makes it possible to avoid a situation in which the necessary amount of medium 16 cannot be prepared in the receptacle 14 at the necessary time.

### (Embodiment 3)

Next, Embodiment 3 of a power generation system is described.

Embodiment 3 allows for rapid charging and discharging of the rechargeable battery 20 in the above-described Embodiments 1 and 2. Upon rapidly charging and discharging the rechargeable battery 20, the change in temperature of the rechargeable battery 20 becomes particularly intense. When the rechargeable battery 20 is, for example, a rechargeable battery such as a lithium-ion battery, performance of the battery degrades due to temperature change upon such rapid charging and discharging.

Accordingly, in Embodiment 3, when rapidly charging and discharging the rechargeable battery 20, instead of the temperature control illustrated in FIG. 3, or along with the temperature control illustrated in FIG. 3, further temperature control of the rechargeable battery 20 is performed. In other words, when rapidly discharging the rechargeable battery 20, the medium 16 is heated to become hot water, and this hot water is used to heat the rechargeable battery 20. When rapidly charging the rechargeable battery 20, the medium 16 is cooled to become cool water, and this cool water is used to cool the rechargeable battery 20.

Based on the relationship between the specific heat and thermal conductivity of air and water, such temperature control makes it possible to maintain the temperature of the rechargeable battery 20 in a fixed range more effectively than when using a fan or the like. Therefore, in the power generation system of Embodiment 3, the rechargeable battery 20 may be rapidly charged and discharged safely. By performing such control when, for example, power needs to be lent in an emergency, the power generation systems in adjacent homes can perform rapid charging and discharging to quickly lend power.

Although exemplary embodiments have been described with reference to the accompanying drawings, it is to be noted that various changes and modifications will be apparent to those skilled in the art based on this disclosure. Therefore, such changes and modifications are to be understood as included within the scope of this disclosure. For example, the functions and the like included in the functional units, members, steps, and the like may be reordered in any logically consistent way. Furthermore, functional units, steps, and the like may be combined into one or divided. The above embodiments are not limited to being implemented faithfully as described and may be implemented by appropriately combining characteristics thereof.

For example, the above explanation focuses on a power generation system, yet this disclosure is not limited to a power generation system and may also be adopted in a method of controlling a power generation system such as the one described above.

The control in the above embodiments only illustrates typical, representative examples, and other types of control may be performed in the same spirit.

In the above embodiments, the medium 16 housed in the receptacle 14 is described as being water, yet the medium of this disclosure is not limited to being water. For example, the medium may be a liquid such as oil or a gas such as air.

In the above embodiments, the fuel cell 12 is described as being a SOFC, yet the fuel cell 12 may be a different fuel cell.

Furthermore, in the above embodiments, the rechargeable battery 20 is described as being a lithium-ion battery, yet the rechargeable battery 20 may be a different rechargeable battery. For example, in a cold region with a harsh natural environment, a different type of storage battery may be used, such as a lead battery, a nickel-hydrogen battery, or the like.

The disclosed fuel cell unit, i.e. the fuel cell power generator, may include a functional unit that subjects the rechargeable battery 20 to temperature control, such as the controller 30. In this case, the disclosed fuel cell subjects the medium to temperature control while also supplying power to be stored in the rechargeable battery. In such a fuel cell, a controller that, based on the temperature of the medium and the temperature of the rechargeable battery, controls power generation of the fuel cell, subjects the medium to temperature control, and subjects the rechargeable battery to temperature control via the medium is preferably provided.

### REFERENCE SIGNS LIST

- 1, 2: Power generation system
- 10: Fuel cell power generator
- 12: Fuel cell
- 14: Receptacle
- 16: Medium
- 20: Rechargeable battery
- 30: Controller
- 32, 34: Temperature sensor
- 40: Meteorological information acquisition unit

## Claims

1. A power generation system comprising:
a fuel cell power generator including a fuel cell and a receptacle housing a medium subjected to temperature control via power generation by the fuel cell;
a rechargeable battery capable of storing power generated by the fuel cell power generator; and
a controller that, based on a temperature of the medium housed in the receptacle and a temperature of the rechargeable battery, controls power generation by the fuel cell, subjects the medium housed in the receptacle to temperature control, and subjects the rechargeable battery to temperature control via the medium supplied from the fuel cell power generator.

2. The power generation system of claim 1, wherein the controller subjects the rechargeable battery to temperature control by controlling a temperature of the medium supplied from the fuel cell power generator.

3. The power generation system of claim 1, wherein the controller subjects the rechargeable battery to temperature control by controlling an amount of the medium supplied from the fuel cell power generator.

4. The power generation system of claim 1, wherein the controller controls power generation by the fuel cell and subjects the medium housed in the receptacle to temperature control so that at a set time, at least one of a temperature and an amount of the medium housed in the receptacle satisfies a set condition.

5. The power generation system of claim 1, wherein the controller subjects at least a portion of the medium to temperature control separately from the medium used for temperature control of the rechargeable

6. The power generation system of claim 1, wherein the controller controls the rechargeable battery to be a set temperature at a set time.

7. A power generation system comprising:
a fuel cell power generator including a fuel cell and a receptacle housing a medium subjected to temperature control via power generation by the fuel cell;
a rechargeable battery capable of storing power generated by the fuel cell power generator;
a controller that, based on a temperature of the medium housed in the receptacle and a temperature of the rechargeable battery, controls power generation by the fuel cell, subjects the medium housed in the receptacle to temperature control, and subjects the rechargeable battery to temperature control via the medium supplied from the fuel cell power generator; and
a meteorological information acquisition unit configured to acquire information on a meteorological element, wherein
based on the information on a meteorological element acquired by the meteorological information acquisition unit, the temperature of the medium housed in the receptacle, and the temperature of the rechargeable battery, the controller controls power generation by the fuel cell, subjects the medium housed in the receptacle to temperature control, and subjects the rechargeable battery to temperature control via the medium supplied from the fuel cell power generator.

8. A method of controlling a power generation system,
the power generation system comprising:
a fuel cell power generator including a fuel cell and a receptacle housing a medium subjected to temperature control via power generation by the fuel cell; and
a rechargeable battery capable of storing power generated by the fuel cell power generator,
the method comprising:
based on a temperature of the medium housed in the receptacle and a temperature of the rechargeable battery, controlling power generation by the fuel cell, subjecting the medium housed in the receptacle to temperature control, and subjecting the rechargeable battery to temperature control via the medium supplied from the fuel cell power generator.

9. A fuel cell that subjects a medium to temperature control and is capable of supplying power to be stored in a rechargeable battery, the fuel cell comprising:
a controller that, based on a temperature of the medium and a temperature of the rechargeable battery, controls power generation by the fuel cell, subjects the medium to temperature control, and subjects the rechargeable battery to temperature control via the medium.
